# EUROPÄISCHE PATENTSCHRIFT

(11) **EP 3 658 442 B1**
(45) Veröffentlichungstag und Bekanntmachung des Hinweises auf die Patenterteilung: **15.09.2021**
(21) Anmeldenummer: 18746872.3
(22) Anmeldetag: 24.07.2018
(51) Int. Cl.: B62D 15/02, B60W 30/18, B60W 30/06, B60W 30/09, G01S 15/93

(54) **VERFAHREN ZUM ZUMINDEST SEMI-AUTONOMEN EINPARKEN EINES KRAFTFAHRZEUGS, FAHRERASSISTENZSYSTEM SOWIE KRAFTFAHRZEUG**
METHOD FOR AT LEAST SEMI-AUTONOMOUSLY PARKING A MOTOR VEHICLE, DRIVER ASSISTANCE SYSTEM, AND MOTOR VEHICLE
PROCÉDÉ D'ENTRÉE EN STATIONNEMENT AU MOINS SEMI-AUTONOME D'UN VÉHICULE AUTOMOBILE, SYSTÈME D'ASSISTANCE AU CONDUCTEUR AINSI QUE VÉHICULE AUTOMOBILE

(30) Priorität: 25.07.2017 DE 102017116740
(43) Veröffentlichungstag der Anmeldung: 03.06.2020
(73) Patentinhaber: Valeo Schalter und Sensoren GmbH, 74321 Bietigheim-Bissingen (DE)
(72) Erfinder: WINEBARGER, Joshua, 74321 Bietigheim-Bissingen (DE); AYYAPPAN, Thirumalai Kumarasamy, 74321 Bietigheim-Bissingen (DE)
(74) Vertreter: Pothmann, Karsten
(86) Internationale Anmeldenummer: PCT/EP2018/069962
(87) Internationale Veröffentlichungsnummer: WO 2019/020586

(56) Entgegenhaltungen:
- EP-A1- 2 253 509
- EP-A1- 2 960 128
- DE-A1-102015 118 471

## Beschreibung

Die Erfindung betrifft ein Verfahren zum zumindest semi-autonomen Einparken eines Kraftfahrzeugs in eine Parklücke mit einem ersten Parklückenbereich, einem gegenüber dem ersten Parklückenbereich erhöhten zweiten Parklückenbereich und einem von zumindest zwei Rädern des Kraftfahrzeugs nacheinander zu überwindenden Übergang zwischen dem ersten und dem zweiten Parklückenbereich. Die Erfindung betrifft außerdem ein Fahrerassistenzsystem sowie ein Kraftfahrzeug.

Es ist bereits aus dem Stand der Technik bekannt, Kraftfahrzeuge zumindest semi-autonom zu manövrieren, um sie beispielsweise in eine Parklücke einzuparken. Beim semi-autonomen Manövrieren übernimmt ein Fahrerassistenzsystem des Kraftfahrzeugs eine Lenkung des Kraftfahrzeugs, während ein Fahrer des Kraftfahrzeugs das Gaspedal sowie die Bremse des Kraftfahrzeugs betätigt. Beim autonomen beziehungsweise vollautonomen Manövrieren betätigt das Fahrerassistenzsystem zusätzlich zu der Lenkung auch das Gaspedal und die Bremse, sodass das Kraftfahrzeug automatisch gelenkt, beschleunigt und abgebremst wird.

Dabei ist es auch bekannt, den Fahrer beim Einparken in eine Parklücke zu unterstützen, welche einen ersten Parklückenbereich und einen gegenüber dem ersten Parklückenbereich erhöhten zweiten Parklückenbereich aufweist. Bei einer solchen Parklücke kann der erste Parklückenbereich beispielsweise auf einem Niveau einer Fahrbahn des Kraftfahrzeugs liegen und der zweite Parklückenbereich durch eine Stufe ausgebildet sein. Ein Übergang zwischen dem ersten Parklückenbereich und dem zweiten Parklückenbereich kann beispielsweise durch eine Bordsteinkante bzw. eine Randsteinkante ausgebildet sein. Der Übergang kann beispielsweise derart in der Parklücke gelegen sein, dass er während des Einparkens von zumindest zwei Rädern des Kraftfahrzeugs nacheinander zu überwinden ist, wobei das Kraftfahrzeug in einer Parkstellung nach Beendigung des Einparkens mit den zumindest zwei Rädern in dem zweiten Parklückenbereich platziert ist.

Zum Einparken des Kraftfahrzeugs in eine Parklücke mit einem Bordstein ist in der DE 10 2015 112 313 A1 ein Verfahren beschrieben, bei welchem eine relative Lage zwischen einem Kraftfahrzeug und einem Bordstein mittels eines Sensors bestimmt wird. Während des Manövrierens des Kraftfahrzeugs entlang einer vorbestimmten Fahrtrajektorie wird die relative Lage kontinuierlich auf Grundlage von Odometrie aktualisiert. Ein Wert der Lage kann dabei korrigiert werden, sobald ein Kontakt eines Rades des Kraftfahrzeugs mit dem Bordstein erkannt wird, da bei diesem Kontakt die Lage zwischen dem Kraftfahrzeug und dem Bordstein bekannt ist. Um beispielsweise die Bordsteinüberfahrt, also den Kontakt zwischen einem Rad und dem Bordstein, zu erkennen, schlägt die EP 2 689 990 A2 ein Verfahren vor, bei welchem eine Bordsteinfahrt während eines Rangiermanövers eines Kraftfahrzeugs mittels einer fortlaufenden Auswertung einer Radgeschwindigkeit jedes Rades erkannt wird.

Ferner ist aus der EP 2 253 509 A1 ein Fahrerassistenzverfahren zum Auslösen einer vorbestimmten Aktion in Abhängigkeit von einem erfassten Höhenprofil einer Fahrbahnoberfläche eines Kraftfahrzeugs bekannt. Wenn anhand des Höhenprofils ein Bordstein erfasst wurde, so kann beispielsweise eine Einparktrajektorie für das Kraftfahrzeug derart angepasst werden, dass sie in einem vorbestimmten Winkel über den Bordstein führt. So können Schädigungen von Reifen und Felgen der Räder vermieden werden.

Weiterhin zeigt die EP 2 960 128 A1 ein Verfahren für ein Kraftfahrzeug, wobei in einem Steuergerät die Umgebung des Kraftfahrzeugs beschreibende Umgebungsdaten, insbesondere Sensordaten, zu einem die Umgebung des Kraftfahrzeugs beschreibenden Umgebungsmodell fusioniert werden, wobei in die Ermittlung des Umgebungsmodells Höhenunterschiede des von dem Kraftfahrzeug befahrenen Untergrundes beschreibende, von einem Fahrwerksystem des Kraftfahrzeugs ermittelte Fahrwerksdaten eingehen.

Außerdem zeigt die DE 10 2015 118471 A1 ein Verfahren zum autonomen Manövrieren eines Kraftfahrzeugs, bei welchem eine Parklücke in einem Umgebungsbereich des Kraftfahrzeugs erkannt wird. Dabei wird eine Bewegung eines Rades des Kraftfahrzeugs über einen Bordstein erkannt und der Positionswert anhand der erkannten Bewegung korrigiert. Es wird eine Höhenänderung zumindest einer Dämpfereinrichtung eines aktiven Fahrwerksystems des Kraftfahrzeugs, welche beim Bewegen des Rades über den Bordstein zum Halten des Kraftfahrzeugs in einer waagerechten Lage eingestellt wird, erfasst und der Positionswert anhand der erfassten Höhenänderung korrigiert.

Es ist Aufgabe der vorliegenden Erfindung, einen zumindest semi-autonomen Einparkvorgang eines Kraftfahrzeugs besonders komfortabel und intuitiv für einen Fahrer des Kraftfahrzeugs und zusätzlich besonders schonend für das Kraftfahrzeug zu gestalten.

Diese Aufgabe wird erfindungsgemäß durch ein Verfahren, durch ein Fahrerassistenzsystem sowie durch ein Kraftfahrzeug mit den Merkmalen gemäß den jeweiligen unabhängigen Patentansprüchen gelöst. Vorteilhafte Ausführungsformen der Erfindung sind Gegenstand der abhängigen Patentansprüche, der Beschreibung und der Figuren.

Bei dem erfindungsgemäßen Verfahren zum zumindest semi-autonomen Einparken eines Kraftfahrzeugs in eine Parklücke mit einem ersten Parklückenbereich, einem gegenüber dem ersten Parklückenbereich erhöhten zweiten Parklückenbereich und einem von zumindest zwei Rädern des Kraftfahrzeugs nacheinander zu überwindenden Übergang zwischen dem ersten und dem zweiten Parklückenbereich wird in einem ersten Schritt a) eine Überwindungsposition in dem ersten Parklückenbereich für ein erstes Rad zum Starten eines ersten Überwindungsvorgang des Übergangs durch das erste Rad bestimmt, in einem zweiten Schritt b) eine Überwindungsstrecke, welche durch das erste Rad ausgehend von der Überwindungsposition bis zu einer vorbestimmten Endposition in dem zweiten Parklückenbereich während des ersten Überwindungsvorgangs zurückgelegt wird, vorgegeben und in einem dritten Schritt c) eine Position zumindest eines zweiten Rades in der Parklücke nach Durchführung des ersten Überwindungsvorganges anhand der vorgegebenen Überwindungsstrecke bestimmt. Darüber hinaus wird in einem vierten Schritt d) bestimmt, ob die vorhergesagte Position des zweiten Rades innerhalb eines vorbestimmten Teilbereiches in der Parklücke liegt, und die Überwindungsstrecke für das erste Rad in einem fünften Schritt e) korrigiert, falls die vorhergesagte Position innerhalb des vorbestimmten Teilbereiches liegt.

Mittels des Verfahrens kann ein Fahrerassistenzsystem in Form von einem Parkassistenzsystem realisiert werden, durch welches das Kraftfahrzeug zumindest semi-autonom in die Parklücke eingeparkt werden kann. Dies bedeutet, dass das Kraftfahrzeug semi-autonom oder vollautonom in die Parklücke eingeparkt wird. Vorzugsweise wird das Kraftfahrzeug vollautonom in die Parklücke eingeparkt. Dazu kann eine Steuereinrichtung des Fahrerassistenzsystems eine Längsführung und eine Querführung des Kraftfahrzeugs übernehmen, also das Kraftfahrzeug automatisch beschleunigen, abbremsen und lenken. Das Kraftfahrzeug kann dabei sowohl in eine als Querparklücke ausgebildete Parklücke als auch in eine als Längsparklücke ausgebildete Parklücke eingeparkt werden. Die Parklücke weist dabei den ersten Parklückenbereich und den zweiten Parklückenbereich auf, welche durch den Übergang, beispielsweise eine Bordsteinkante, getrennt sind. Der Übergang kann beispielsweise parallel zu einer Fahrbahn des Kraftfahrzeugs verlaufen. Der Übergang ist dabei derart in der Parklücke angeordnet, dass das Kraftfahrzeug bei Beendigung des Einparkvorgangs in einer Parkstellung zumindest teilweise auf dem zweiten Parklückenbereich platziert beziehungsweise positioniert ist. Dazu wird der Übergang während des Einparkens von zumindest zwei Rädern des Kraftfahrzeugs nacheinander überfahren bzw. überwunden.

Für den Einparkvorgang des Kraftfahrzeugs in die Parklücke kann beispielsweise eine Parktrajektorie bestimmt werden, entlang welcher sich das Kraftfahrzeug während des Einparkens zumindest semi-autonom bewegt. Die Parktrajektorie wird dabei beispielsweise ausgehend von dem Kraftfahrzeug durch den ersten Parklückenbereich hindurch führend, den Übergang kreuzend und in den zweiten Parklückenbereich führend bestimmt. Zum Überwinden des Übergangs bzw. zum Durchführen von Überwindungsvorgängen des Übergangs, welcher ein Hindernis für die Räder darstellt, wird dabei beispielsweise ein erhöhtes Drehmoment auf das den Überwindungsvorgang durchführende Rad übertragen. Das erhöhte Drehmoment wird insbesondere auf das Rad übertragen, sobald es sich an der Überwindungsposition in dem ersten Parklückenbereich befindet. Ausgehend von Überwindungsposition wird also der Überwindungsvorgang gestartet.

Die Überwindungsposition in dem ersten Parklückenbereich wird für das erste Rad zum Starten des ersten Überwindungsvorgangs des Übergangs durch das erste Rad bestimmt. Die Überwindungsposition des ersten Rades ist also diejenige Position in dem ersten Parklückenbereich, ausgehend von welcher das erste Rad den Übergang überwinden wird. Die Überwindungsposition kann sich dabei an einer beliebig wählbaren Position in dem ersten Parklückenbereich befinden. Zusätzlich wird die Überwindungsstrecke vorgegeben, welche das erste Rad ausgehend von der Überwindungsposition zurückzulegen hat. Nach Zurücklegen der Überwindungsstrecke hat das erste Rad den Übergang überwunden und ist an der Endposition in dem zweiten Parklückenbereich positioniert. Für die Überwindungsstrecke kann beispielsweise ein Wert vorbestimmt bzw. vorgegeben werden, wobei der Wert insbesondere so gewählt ist, dass das erste Rad in der Endposition vollständig in dem zweiten Parklückenbereich platziert ist und einen vorbestimmten Abstand zu dem Übergang aufweist. Insbesondere ist die Überwindungsstrecke so vorgegeben, dass das erste Rad in der Endposition nicht am Übergang übersteht, wodurch ein Reifen des Rades beschädigt werden könnte. Vor dem Durchführen des Überwindungsvorgangs wird die Position des zumindest einen zweiten Rades, welches einen zeitlich nach dem ersten Überwindungsvorgang stattfindenden zweiten Überwindungsvorgang durchführen soll, vorhergesagt. Es wird also prädiktiv bestimmt, welche Position das zweite Rad innehaben wird, sobald das erste Rad die Überwindungsstrecke zurückgelegt haben wird und die Endposition in dem zweiten Parklückenbereich eingenommen haben wird. Auch können die Positionen eines dritten und vierten Rades nach dem Überwindungsvorgang des ersten Rades vorhergesagt werden.

Dann wird überprüft, ob sich die vorhergesagte Position des zweiten Rades innerhalb des vorbestimmten Teilbereiches in der Parklücke befindet. Der vorbestimmte Teilbereich kann beispielsweise ein kritischer Bereich sein, welcher Positionen in der Parklücke umfasst, die durch das zweite Rad nach dem ersten Überwindungsvorgang nicht eingenommen werden sollen. Beispielsweise kann das zweite Rad beschädigt werden, wenn es sich nach dem ersten Überwindungsvorgang in dem vorbestimmten Teilbereich befindet. Um dies zu verhindern, wird die Überwindungsstrecke für das erste Rad korrigiert, falls vorhergesagt wurde, dass die vorhergesagte Position des zweiten Rades innerhalb des vorbestimmten Teilbereiches liegt. Dazu kann beispielsweise die Parktrajektorie korrigiert werden, entlang welcher das Kraftfahrzeug zumindest semi-autonom in die Parklücke bewegt wird.

Durch das Vorhersagen bzw. prädiktive Bestimmen der Position des zweiten Rades nach Durchführung des Überwindungsvorgangs kann also in vorteilhafter Weise eine optimale Parktrajektorie geplant werden. Entlang dieser optimalen Parktrajektorie kann das Kraftfahrzeug dann zumindest semi-autonom in einer für den Fahrer besonders komfortablen und für das Kraftfahrzeug besonders schonende Weise in die Parklücke bewegt werden.

Insbesondere wird eine aktuelle Position des ersten und/oder des zumindest einen zweiten Rades in der Parklücke basierend auf Sensordaten einer fahrzeugseitigen Sensoreinrichtung und/oder Odometriedaten und/oder Radwiderstandsdaten bestimmt, wobei die Position des zweiten Rades nach Durchführung des ersten Überwindungsvorgangs basierend auf der aktuellen Position des ersten Rades und/oder des zweiten Rades vorhergesagt wird. Eine solche Sensoreinrichtung kann zumindest einen Abstandssensor, beispielsweise einen Ultraschallsensor und/oder einen Radar-Sensor und/oder einen Lidar-Sensor, und/oder eine Kamera umfassen. Anhand dieser Sensordaten kann auch die Parklücke erkannt und vermessen werden. Zu diesem Zweck kann das Kraftfahrzeug beispielsweise bewegt werden, während ein Umgebungsbereich des Kraftfahrzeugs mittels der Sensoreinrichtung insbesondere kontinuierlich erfasst wird. Insbesondere kann mittels der fahrzeugseitigen Sensoreinrichtung auch der Übergang zwischen dem ersten und dem zweiten Parklückenbereich der Parklücke erkannt werden und eine relative Lage zwischen dem Kraftfahrzeug und dem Übergang erfasst werden. Dadurch können auch die aktuellen Positionen der Räder relativ zu dem Übergang erfasst werden. Auch können die aktuellen Positionen anhand von Odometriedaten des Kraftfahrzeugs bestimmt werden. Anhand der Odometriedaten, beispielsweise anhand von Radumdrehungen der Räder, kann eine von einer definierten Startposition eines Rades zurückgelegte Strecke erfasst werden und dadurch die aktuelle Position anhand der Startposition sowie der zurückgelegten Strecke erfasst werden. Auch kann vorgesehen sein, dass zur Positionsbestimmung der Radwiderstand erfasst wird. Dieser erhöht sich bei einem Rad, wenn das Rad den ein Hindernis darstellenden Übergang berührt. Sobald sich der Radwiderstand erhöht, kann als die aktuelle Position des Rades die Position des Übergangs in der Parklücke bestimmt werden.

Durch Erfassen der aktuellen Position, insbesondere anhand der Sensordaten und/oder der Odometriedaten, können die Position des zweiten Rades nach dem ersten Überwindungsvorgang und insbesondere auch die Überwindungsposition des ersten Rades prädiktiv bestimmt werden. Die Überwindungsposition, welche beispielsweise relativ zu dem Übergang angegeben sein kann, kann beispielsweise anhand der aktuellen Position des ersten Rades relativ zu dem Übergang sowie anhand der geplanten Parktrajektorie vorhergesagt werden. Anhand der vorhergesagten Überwindungsposition des ersten Rades sowie anhand der aktuellen Position des zweiten Rades kann vorhergesagt werden, welche Zwischenposition das zweite Rad innehaben wird, wenn sich das erste Rad an der Überwindungsposition befindet. Ausgehend von dieser vorhergesagten Zwischenposition sowie anhand der vorbestimmten Überwindungsstrecke kann vorhergesagt werden, welche Position das zweite Rad innehaben wird, wenn das erste Rad die Endposition in dem zweiten Parklückenbereich eingenommen hat. Die Position des zweiten Rades am Ende des ersten Überwindungsvorgangs kann also anhand der aktuellen Position des ersten Rades, der aktuellen Position des zweiten Rades, anhand der Überwindungsposition sowie anhand der vorbestimmten Überwindungsstrecke besonders genau vorhergesagt werden.

Vorzugsweise wird die Überwindungsposition als eine Position bestimmt, in welcher sich das erste Rad in dem ersten Parklückenbereich befindet und den Übergang berührt. Anders ausgedrückt wird diese Position als Überwindungsposition vorgegeben, bei welcher das in Richtung des Übergangs bewegte erste Rad an den Übergang prallt. Die Überwindungsposition des ersten Rades ist also die Anprallposition des ersten Rades an dem Übergang. Diese Anprallposition kann prädiktiv anhand der geplanten Einparktrajektorie sowie anhand der aktuellen Position des ersten Rades bestimmt werden. Auch kann vorgesehen sein, dass die Anprallposition anhand des Radwiderstandes des ersten Rades bestimmt wird. Beispielsweise kann, sobald das erste Rad an dem Übergang angeprallt ist, die aktuelle Position des zweiten Rades als die Zwischenposition bestimmt werden, anhand derer unter Berücksichtigung der Überwindungsstrecke die Position des zweiten Rades nach Durchführung des Überwindungsvorgangs des ersten Rades prädiktiv bestimmt werden kann.

Es erweist sich als vorteilhaft, wenn die Überwindungsstrecke für das erste Rad korrigiert wird, indem eine korrigierte Überwindungsstrecke als die Summe der vorbestimmten Überwindungsstrecke und einem von der Position des zweiten Rades abhängigen Korrekturwert bestimmt wird. Durch die korrigierte Überwindungsstrecke wird also eine korrigierte Endposition für das erste Rad in dem zweiten Parklückenbereich bestimmt. Dadurch, dass die Position des zweiten Rades bei der Bestimmung des Korrekturwertes berücksichtigt wird, kann gewährleistet werden, dass sich das zweite Rad an der korrigierten Endposition des ersten Rades außerhalb des vorbestimmten Teilbereiches befindet. Der Korrekturwert kann beispielsweise so gewählt werden, dass er einer minimalen Strecke entspricht, welche das zweite Rad zum Verlassen des vorbestimmten Teilbereiches abfahren muss.

In einer Weiterbildung der Erfindung wird zum autonomen Einparken des Kraftfahrzeugs das erste Rad an der Überwindungsposition positioniert, das erste Rad zum Durchführen des ersten Überwindungsvorgangs entlang der Überwindungsstrecke oder entlang einer korrigierten Überwindungsstrecke bewegt und das Kraftfahrzeug abgebremst, sobald sich das erste Rad an der Endposition der Überwindungsstrecke oder einer korrigierten Endposition der korrigierten Überwindungsstrecke befindet. Wenn das Kraftfahrzeug beispielsweise autonom eingeparkt wird, so wird das Kraftfahrzeug entlang der Parktrajektorie bewegt, bis das erste Rad die Überwindungsposition innehat. Hier kann ein erhöhtes Drehmoment auf das erste Rad zum Durchführen des ersten Überwindungsvorgangs übertragen werden. Sobald das erste Rad die Überwindungsstrecke oder die korrigierte Überwindungsstrecke zurückgelegt hat und sich an der Endposition oder der korrigierten Endposition in dem zweiten Parklückenbereich befindet, wird das Kraftfahrzeug abgebremst. Durch das Abbremsen kann gewährleistet werden, dass das Kraftfahrzeug aufgrund des erhöhten Drehmoments des ersten Rades nicht mit einem die Parklücke begrenzenden Objekt, beispielsweise einem anderen Fahrzeug, kollidiert. Nach dem Abbremsen des Kraftfahrzeugs können beispielsweise weitere Überwindungsvorgänge für weitere Räder des Kraftfahrzeugs durchgeführt werden, solange bis das Kraftfahrzeug die Parkstellung eingenommen hat.

Gemäß einer Ausführungsform der Erfindung wird in Schritt c) ein erster Abstand zwischen dem zweiten Rad und dem Übergang vorhergesagt, indem die Position des zweiten Rades relativ zu dem Übergang vorhergesagt wird. In Schritt d) wird zum Bestimmen, ob die vorhergesagte Position des zweiten Rades innerhalb des vorbestimmten Teilbereiches der Parklücke liegt, der vorhergesagte erste Abstand mit einem vorbestimmten ersten Abstands-Schwellwert verglichen. In Schritt e) wird die Überwindungsstrecke für das erste Rad korrigiert, falls der vorhergesagte erste Abstand einen vorbestimmten ersten Abstands-Schwellwert unterschreitet. Diese Ausführungsform richtet sich insbesondere auf darauf, zu überprüfen, ob nach dem ersten Überwindungsvorgang durch das erste Rad das zweite Rad einen zweiten Überwindungsvorgang zumindest begonnen hat. Dies bedeutet beispielsweise, dass sich das zweite Rad an der Endposition des ersten Rades bereits in den zweiten Parklückenbereich befindet oder in dem ersten Parklückenbereich an dem Übergang ansteht. Der vorbestimmte Teilbereich umfasst hier also den Übergang selbst sowie Positionen nahe des Übergangs in dem ersten und oder dem zweiten Parklückenbereich. Der Teilbereich wird dabei durch den ersten Abstands-Schwellwert begrenzt. Der erste Abstands-Schwellwert ist dabei insbesondere so gewählt, dass ein Reifen des zweiten Rades den Übergang nicht berührt, wenn der erste Abstand zumindest dem ersten Abstands-Schwellwert entspricht.

Um nun vorherzusagen, ob das zweite Rad nach Durchführung des ersten Überwindungsvorgangs auch auf dem zweiten Parklückenbereich platziert ist oder kurz davorsteht, dort platziert zu werden, wird die Position des zweiten Rades relativ zu dem Übergang bestimmt. Die Position des zweiten Rades relativ zum Übergang entspricht dabei dem ersten Abstand zwischen dem zweiten Rad und dem Übergang. Beispielsweise kann die Position des zweiten Rades relativ zu dem Übergang anhand der Sensordaten der fahrzeugseitigen Sensoreinrichtung bestimmt werden. Wenn vorhergesagt wird, dass der erste Abstand des zweiten Rades den ersten Abstands-Schwellwert überschreitet, so kann davon ausgegangen werden, dass das zweite Rad nach dem ersten Überwindungsvorgang weit genug von dem Übergang entfernt positioniert ist, um eine Beschädigung des Reifens zu vermeiden. Wenn vorhergesagt wird, dass der erste Abstand des zweiten Rades den ersten Abstands-Schwellwert unterschreitet, so kann davon ausgegangen werden, dass das zweite Rad nach dem ersten Überwindungsvorgang derart nah an dem Übergang positioniert ist, dass der Reifen den Übergang berührt. Dabei kann der erste Abstands-Schwellwert in dem ersten Parklückenbereich definiert sein, sodass sich der Teilbereich in dem ersten Parklückenbereich befindet und durch den Übergang sowie den ersten Abstands-Schwellwert begrenzt ist. Wenn sich das zweite Rad nach dem ersten Überwindungsvorgang beispielsweise in dem ersten Parklückenbereich befindet und der erste Abstand den ersten Abstands-Schwellwert unterschreitet, so ist dies ein Indiz dafür, dass der Reifen des zweiten Rades an dem Übergang ansteht. Vorzugsweise ist der erste Abstands-Schwellwert in dem zweiten Parklückenbereich definiert, sodass sich der Teilbereich in dem zweiten Parklückenbereich befindet und durch den Übergang sowie den ersten Abstands-Schwellwert begrenzt ist. Wenn sich das zweite Rad nach dem ersten Überwindungsvorgang beispielsweise in dem zweiten Parklückenbereich befindet und der erste Abstand den ersten Abstands-Schwellwert unterschreitet, so ist dies ein Indiz dafür, dass der Reifen des zweiten Rades an dem Übergang übersteht bzw. über den Übergang hinausragt. Beide Fälle können den Reifen beschädigen. Um dies zu verhindern, wird die Überwindungsstrecke für das erste Rad korrigiert.

Insbesondere wird die Überwindungsstrecke für das erste Rad korrigiert, indem eine korrigierte Überwindungsstrecke als die Summe der vorbestimmten Überwindungsstrecke und einer Differenz zwischen dem ersten Abstand und dem ersten Abstands-Schwellwert bestimmt wird. Das erste Rad wird also während des ersten Überwindungsvorgangs so lange weiter bewegt, bis das zweite Rad den Teilbereich verlassen hat und vollständig in dem zweiten Parklückenbereich positioniert ist. So kann in vorteilhafter Weise ein für die Reifen der Räder besonders schonender Einparkvorgang bereitgestellt werden.

Gemäß einer weiteren Ausführungsform der Erfindung wird in Schritt c) ein zweiter Abstand zwischen dem ersten und dem zweiten Rad vorhergesagt, indem die Position des zweiten Rades relativ zu dem ersten Rad vorhergesagt wird. In Schritt d) wird zum Bestimmen, ob die vorhergesagte Position des zweiten Rades innerhalb des vorbestimmten Teilbereiches der Parklücke liegt, der vorhergesagte zweite Abstand mit der vorbestimmten Überwindungsstrecke verglichen, und in Schritt e) die Überwindungsstrecke für das erste Rad korrigiert, falls der vorhergesagte zweite Abstand die vorbestimmte Überwindungsstrecke unterschreitet. Mittels dieser Ausführungsform kann überprüft werden, ob sich das zweite Rad nach der Durchführung des ersten Überwindungsvorgangs in dem zweiten Parklückenbereich befindet. Hier erfolgt die Überprüfung, ob sich das zweite Rad in dem Teilbereich befindet, anhand eines Vergleichs zwischen dem zweiten Abstand der Räder zueinander und der vorbestimmten Überwindungsstrecke. Zum Bestimmen des zweiten Abstands wird die relative Position der zwei Räder zueinander bestimmt. Wenn der zweite Abstand nach dem ersten Überwindungsvorgang größer als die Überwindungsstrecke ist, so kann davon ausgegangen werden, dass das zweite Rad den zweiten Überwindungsvorgang noch nicht begonnen hat und sich nach wie vor dem ersten Parklückenbereich befindet. Falls der zweite Abstand kleiner als die Überwindungsstrecke ist, so wird davon ausgegangen, dass sich das zweite Rad zwar in dem zweiten Parklückenbereich befindet, den zweiten Überwindungsvorgang jedoch nicht vollständig ausgeführt hat und beispielsweise in Berührung mit dem Übergang steht. Um das zweite Rad während des ersten Überwindungsvorgangs sicher auf dem zweiten Parklückenbereich platzieren zu können, wird die Überwindungsstrecke des ersten Rades korrigiert. Durch das Erfassen des zweiten Abstands und des Vergleichs mit der Überwindungsstrecke kann auf besonders einfache Weise bewertet werden, ob das zweite Rad nach dem ersten Überwindungsvorgang in dem zweiten Parklückenbereich positioniert ist.

Insbesondere wird die Überwindungsstrecke für das erste Rad korrigiert, indem eine korrigierte Überwindungsstrecke als die Summe der vorbestimmten Überwindungsstrecke und des zweiten Abstands bestimmt wird. Da der zweite Abstand des zweiten Rades zu dem ersten Rad bereits zur Bewertung, ob sich das zweite Rad in dem vorbestimmten Teilbereich befindet, erfasst wird, kann somit auf besonders einfache Weise die korrigierte Überwindungsstrecke bestimmt werden.

In einer weiteren Ausführungsform der Erfindung wird in Schritt c) ein dritter Abstand zwischen dem zweiten Rad und einer vorbestimmten, sich in dem ersten Parklückenbereich befindlichen Vorbereitungsposition für eine Vorbereitung eines zweiten Überwindungsvorgang des Übergangs durch das zweite Rad bestimmt, indem die Position des zweiten Rades relativ zu der Vorbereitungsposition vorhergesagt wird. In Schritt d) wird zum Bestimmen, ob die vorhergesagte Position des zweiten Rades innerhalb des vorbestimmten Teilbereiches der Parklücke liegt, der vorhergesagte dritte Abstand mit einem vorbestimmten zweiten Abstands-Schwellwert verglichen, und in Schritt e) die Überwindungsstrecke für das erste Rad korrigiert, falls der vorhergesagte dritte Abstand den vorbestimmten zweiten Abstands-Schwellwert unterschreitet.

Dieser Ausführungsform liegt zugrunde, dass ein Rad, insbesondere jedes Rad, bevor es mit dem Überwindungsvorgang beginnt, zunächst an einer Vorbereitungsposition in dem ersten Parklückenbereich positioniert wird und ausgehend von der Vorbereitungsposition an die Überwindungsposition bewegt wird. Die Vorbereitungsposition weist beispielsweise einen Abstandswert aus einem Wertebereich von 10 cm bis 25 cm relativ zu dem Übergang auf. Beispielsweise bewegt sich das Kraftfahrzeug entlang der Parktrajektorie in Richtung des Übergangs mit einer ersten Geschwindigkeit, wobei das Kraftfahrzeug abgebremst wird, wenn sich das erste Rad an der ersten Vorbereitungsposition befindet. Ausgehend von der ersten Vorbereitungsposition fährt das Kraftfahrzeug dann mit einer im Vergleich zur ersten Geschwindigkeit kleineren zweiten Geschwindigkeit weiter, bis das erste Rad die Überwindungsposition zum Starten des ersten Überwindungsvorgangs erreicht hat. Wenn die Überwindungsposition beispielsweise der Anprallposition entspricht, so kann durch das Einnehmen der Vorbereitungsposition und das Reduzieren der Geschwindigkeit ab der Vorbereitungsposition bis hin zur Anprallposition verhindert werden, dass das erste Rad mit einer überhöhten Geschwindigkeit an den Übergang prallt und dadurch der Reifen des ersten Rades beschädigt wird.

Auch kann vorgesehen sein, dass das Kraftfahrzeug abgebremst wird, sobald ein Rad nach seinem Überwindungsvorgang die Endposition auf dem zweiten Parklückenbereich erreicht hat. Um nun zu verhindern, dass das Kraftfahrzeug in kurzen Zeitabständen mehrmalig abgebremst wird, nämlich einmal an der an Endposition des ersten Rades und einmal an der Vorbereitungsposition des zweiten Rades, kann die Überwindungsstrecke derart korrigiert werden, dass sich das zweite Rad an der Vorbereitungsposition befindet, wenn sich das erste Rad an seiner korrigierten Endposition befindet. Dabei wird die Überwindungsstrecke für das erste Rad korrigiert, falls erfasst wurde, dass der dritte Abstand zwischen dem zweiten Rad und der Vorbereitungsposition den dritten Abstands-Schwellwert unterschreitet. Dann ist nämlich eine Distanz, welche das zweite Rad bis zur Vorbereitungsposition zurücklegen muss, derart gering, dass ein erneutes Abbremsen des Kraftfahrzeugs kurz bevorsteht. So kann ein Parkvorgang für den Fahrer besonders komfortabel gestaltet werden, da eine Anzahl an Abbremsvorgängen während des Einparkens reduziert wird.

Insbesondere wird die Überwindungsstrecke für das erste Rad korrigiert, indem eine korrigierte Überwindungsstrecke als die Summe der vorbestimmten Überwindungsstrecke und des dritten Abstands bestimmt wird. Gemäß dieser Ausführungsform wird also das erste Rad entlang der korrigierten Überwindungsstrecke so lange weiter bewegt, bis sich das zweite Rad an der Vorbereitungsposition befindet. Das Abbremsen des Kraftfahrzeugs an der Endposition des ersten Rades fällt somit mit dem Abbremsen des Kraftfahrzeugs an der Vorbereitungsposition des zweiten Rades zusammen.

Die Erfindung betrifft außerdem ein Fahrerassistenzsystem für ein Kraftfahrzeug zum zumindest semi-autonomen Einparken des Kraftfahrzeugs in eine Parklücke mit einem ersten Parklückenbereich, einem gegenüber dem ersten Parklückenbereich erhöhten zweiten Parklückenbereich und einem von zumindest zwei Rädern des Kraftfahrzeugs nacheinander zu überwindenden Übergang zwischen dem ersten und dem zweiten Parklückenbereich, wobei das Fahrerassistenzsystem zum Durchführen eines erfindungsgemäßen Verfahrens oder einer vorteilhaften Ausführungsform davon ausgelegt ist. Das Fahrerassistenzsystem, welches vorliegend als ein Parkassistenzsystem ausgebildet ist, weist zum Durchführen des Verfahrens insbesondere eine Steuereinrichtung auf, welche insbesondere auch dazu ausgelegt ist, eine Querführung und/oder eine Längsführung des Kraftfahrzeugs zu übernehmen. Vorzugsweise weist das Fahrerassistenzsystem eine Sensoreinrichtung, welche beispielsweise zumindest einen Ultraschallsensor und/oder zumindest eine Kamera und/oder zumindest einen Lidar-Sensor und/oder Radar-Sensor umfasst, zum Erfassen der Parklücke und zum Bestimmen eines Abstands zwischen dem Kraftfahrzeug und dem Übergang in der Parklücke und/oder eine Einrichtung zum Erfassen von Odometriedaten auf.

Ein erfindungsgemäßes Kraftfahrzeug umfasst ein erfindungsgemäßes Fahrerassistenzsystem. Das Kraftfahrzeug ist insbesondere als ein Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Dabei zeigen:
- Fig. 1: eine schematische Darstellung einer Ausführungsform eines erfindungsgemäßen Kraftfahrzeugs und eine Parklücke;
- Fig. 2a, 2b: schematische Darstellungen von Bewegungsbahnen von Rädern des Kraftfahrzeugs; und
- Fig. 3a, 3b: weitere schematische Darstellungen von Bewegungsbahnen von Rädern des Kraftfahrzeugs.

In den Figuren sind gleiche sowie funktionsgleiche Elemente mit den gleichen Bezugszeichen versehen.

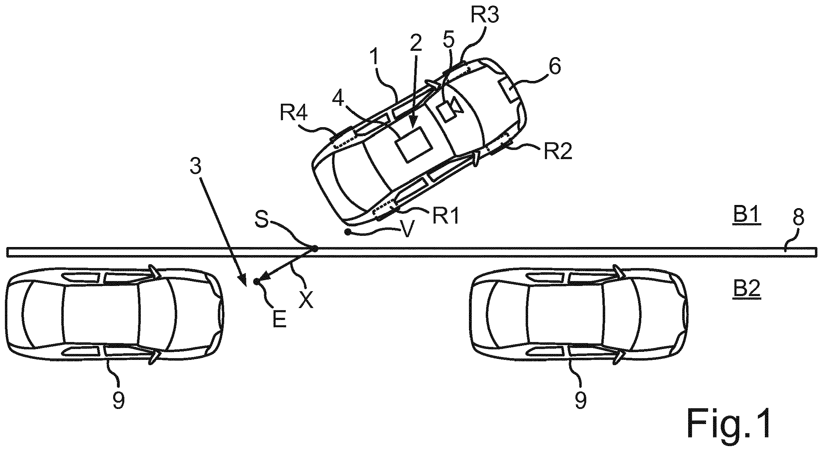

Fig. 1 zeigt ein Kraftfahrzeug 1 gemäß der vorliegenden Erfindung. Das Kraftfahrzeug 1 ist im vorliegenden Fall als ein Personenkraftwagen ausgebildet. Das Kraftfahrzeug 1 weist vier Räder R1, R2, R3, R4 auf. Außerdem weist das Kraftfahrzeug 1 ein Fahrerassistenzsystem 2 auf, welches einen Fahrer des Kraftfahrzeugs 1 bei einem zumindest semi-autonomen Einparkvorgang in eine Parklücke 3 unterstützt. Das Fahrerassistenzsystem 2 weist hier eine Steuereinrichtung 4 auf, welche beispielsweise durch ein fahrzeugseitiges Steuergerät ausgebildet sein kann. Die Steuereinrichtung 4 ist insbesondere dazu ausgelegt, zum Bereitstellen des semi-autonomen Einparkvorgangs in eine Lenkung des Kraftfahrzeugs 1 einzugreifen und zum Bereitstellen eines vollautonomen Einparkvorgangs zusätzlich zur der Lenkung ein Gaspedal und eine Bremse des Kraftfahrzeugs 1 zu betätigen. Das Fahrerassistenzsystem 2 weist hier außerdem eine Sensoreinrichtung auf, welche zum Überwachen eines Umgebungsbereiches 7 des Kraftfahrzeugs 1 ausgebildet ist. Die Sensoreinrichtung umfasst hier zumindest eine Kamera 5 und zumindest einen Abstandssensor 6, beispielsweise einen Ultraschallsensor.

Mittels der fahrzeugseitigen Sensoreinrichtung 5, 6 kann die Parklücke 3, beispielsweise bei einer Vorbeifahrt des Kraftfahrzeugs 1 an der Parklücke 3, erfasst und vermessen werden. Die Parklücke 3 weist einen ersten Parklückenbereich B1 und einen gegenüber dem ersten Parklückenbereich B1 erhabenen beziehungsweise erhöhten zweiten Parklückenbereich B2 auf. Der zweite Parklückenbereich B2 ist also entlang einer Fahrzeughochrichtung oberhalb des ersten Parklückenbereich B1 angeordnet. Die Parklückenbereiche B1, B2 sind durch einen Übergang 8 voneinander getrennt, welcher insbesondere durch eine Borsteinkante ausgebildet ist. Im vorliegenden Fall ist die Parklücke 3 als eine Längsparklücke ausgebildet, welche durch zwei Objekte 9 in Form von zwei anderen Fahrzeugen begrenzt wird. Der Übergang 8 ist hier derart in der Parklücke 3 angeordnet, dass das Kraftfahrzeug 1 in einer Parkstellung zumindest teilweise in dem zweiten Parklückenbereich B2 positioniert ist. Hier ist der Übergang 8 derart in der Parklücke 3 angeordnet, dass das Kraftfahrzeug 1 in der Parkstellung vollständig auf dem zweiten Parklückenbereich B2 platziert ist. Zum Einnehmen der Parkstellung wird hier während des Einparkens ein Überwindungsvorgang des Übergangs 8 durch ein rechtes Hinterrad R1, danach ein Überwindungsvorgang durch ein rechtes Vorderrad R2, danach ein Überwindungsvorgang durch linkes Hinterrad Rad R4, und danach ein Überwindungsvorgang durch ein linkes Vorderrad R3 durchgeführt.

Die Überwindungsvorgänge werden nun exemplarisch anhand des Überwindungsvorgangs des rechten Hinterrades Rades R1 beschrieben. Überwindungsvorgänge der weiteren Räder R2, R3 R4 können analog dazu durchgeführt werden. Zum Durchführen des Überwindungsvorgangs des rechten Hinterrades R1 wird das rechte Hinterrad R1 zunächst entlang einer vorbestimmten Einparktrajektorie zu einer Vorbereitungsposition V in dem ersten Parklückenbereich B1 bewegt. Sobald das rechte Hinterrad R1 die Vorbereitungsposition V eingenommen hat, wird das Kraftfahrzeug 1 abgebremst. Die Vorbereitungsposition V weist insbesondere einen Abstandswert aus einem Bereich zwischen 10 cm und 25 cm zu dem Übergang 8 auf. Von dort aus wird das Kraftfahrzeug 1 mit einer reduzierten Geschwindigkeit in Richtung des Übergangs 8 bewegt, bis das rechte Hinterrad R1 eine Überwindungsposition S eingenommen hat. Die Überwindungsposition S ist insbesondere eine Anprallposition, bei welcher sich das rechte Hinterrad R1 in dem ersten Parklückenbereich B1 befindet und den Übergang 8 berührt. Sobald sich das rechte Hinterrad R1 an der Überwindungsposition S befindet, wird ein erhöhtes Drehmoment auf das rechte Hinterrad R1 übertragen, um das rechte Hinterrad R1 auf den zweiten Parklückenbereich B2 zu heben. Dabei wird der Überwindungsvorgang so lange durchgeführt, bis das rechte Hinterrad R1 ausgehend von der Überwindungsposition S eine vorbestimmte Überwindungsstrecke X zurückgelegt hat und eine Endposition E in dem zweiten Parklückenbereich B2 eingenommen hat. Dort wird das Kraftfahrzeug 1 insbesondere abgebremst.

Dabei ist es nun vorgesehen, dass vorhergesagt wird, welche Position P ein Rad R1, R2, R3, R4 nach dem Überwindungsvorgang eines vorhergehenden Rades R1, R2, R3, R4 innehaben wird. Hier kann beispielsweise vorhergesagt werden, welche Position das rechte Vorderrad R2 innehaben wird, nachdem das rechte Hinterrad R1 den Überwindungsvorgang durchgeführt hat und an der Endposition E in dem zweiten Parklückenbereich B2 positioniert ist. Dann wird überprüft, ob sich die vorhergesagte Position in einem kritischen Teilbereich innerhalb der Parklücke 3 befindet. Falls sich die vorhergesagte Position P, beispielsweise die Position P des rechten Vorderrades R2, nämlich in dem vorbestimmten Teilbereich der Parklücke 3 befindet, so können die Überwindungsstrecke X sowie die Endposition E für das vorhergehende Rad korrigiert werden. Beispielsweise kann die Überwindungsstrecke für das rechte Hinterrad R1 korrigiert werden, sodass sich das rechte Vorderrad R2 nach dem Überwindungsvorgang des rechten Hinterrades R1 außerhalb des kritischen Teilbereiches in der Parklücke 3 befindet.

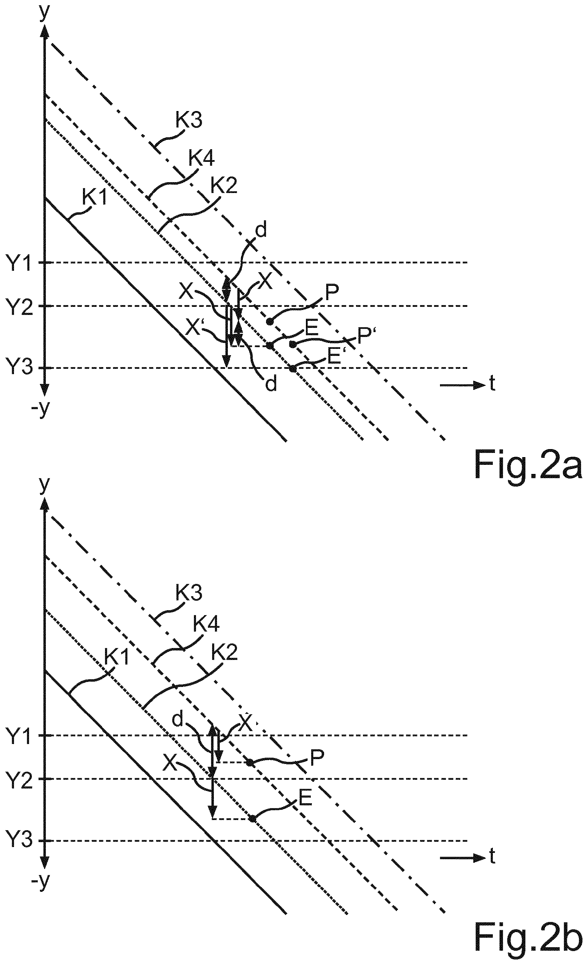

In Fig. 2a und Fig. 2b sind exemplarisch Bewegungsbahnen K1, K2, K3, K4 der Räder R1, R2, R3, R4 gezeigt, anhand derer vorhergesagt werden kann, ob eine Korrektur der Überwindungsstrecke nötig ist oder nicht. In positiver Abszissenrichtung ist die Zeit t aufgetragen. In positiver Ordinatenrichtung ist die noch zu fahrende Strecke y und in negativer Ordinatenrichtung die bereits gefahrene Strecke -y der Räder R1, R2, R3, R4 aufgetragen. Dabei veranschaulicht eine erste Bewegungsbahn K1 einen zeitabhängigen Positionswechsel des rechten Hinterrades R1, eine zweite Bewegungsbahn K2 einen zeitabhängigen Positionswechsel des rechten Vorderrades R2, eine dritte Bewegungsbahn K3 einen zeitabhängigen Positionswechsel des linken Vorderrades R3 und eine vierte Bewegungsbahn K4 einen zeitabhängigen Positionswechsel des linken Hinterrades R4. Die Bewegungsbahnen K1, K2, K3, K4 sind zur Veranschaulichung lineare Bewegungsbahnen. Die Position Y1 auf der Ordinate markiert eine Position in dem ersten Parklückenbereich B1 vor dem Übergang 8, welche insbesondere der Vorbereitungsposition V für die Räder R1, R2, R3, R4 entspricht. Die Position Y2 markiert die Position des Übergangs 8 zwischen den beiden Parklückenbereichen B1 und B2, welche insbesondere der Überwindungsposition S für die Räder R1, R2, R3, R4 entspricht. Die Position Y3 markiert eine Position in dem zweiten Parklückenbereich B2.

Gemäß Fig. 2a und Fig. 2b wird der Zeitpunkt betrachtet, in welchem sich das rechte Vorderrad R2 an der Überwindungsposition S befindet. Dies entspricht dem Zeitpunkt, bei welchem die zweite Bewegungsbahn K2 die von Y2 ausgehende horizontale Linie Y2 schneidet. Zu diesem Zeitpunkt befindet sich das rechte Hinterrad Rad R1, wie anhand der ersten Bewegungsbahn K1 erkennbar, bereits in dem zweiten Parklückenbereich B2. Das linke Vorderrad R3 befindet sich, wie anhand der dritten Bewegungsbahn K3 erkennbar, noch in dem ersten Parklückenbereich B1. Hier soll vorhergesagt werden, an welcher Position P sich das linke Hinterrad R4 befindet, sobald das rechte Vorderrad R2 ausgehend von der Überwindungsposition S die vorbestimmte Überwindungsstrecke X zurückgelegt hat und die Endposition E eingenommen hat. Das rechte Vorderrad R2 ist hier also ein erstes Rad, welches einen ersten Überwindungsvorgang durchgeführt hat. Das linke Hinterrad R4 ist hier ein zweites Rad, dessen Position P nach dem ersten Überwindungsvorgang des ersten Rades R2 vorhergesagt werden soll. Diese Position P kann als eine relative Position des zweiten Rades R4 zu dem ersten Rad R2 und damit als ein Abstand d des zweiten Rades R4 zu dem ersten Rad R2 an der Endposition E des ersten Rades R2 bestimmt werden. Der Abstand d ist hier veranschaulicht durch den vertikalen Doppelpfeil zwischen den Bewegungsbahnen K2 und K4. Aufgrund der vorliegend vereinfachenden Annahme, dass die Bewegungsbahnen K2 und K4 linear und parallel zueinander sind, kann der Abstand d zu einem beliebigen Zeitpunkt bestimmt werden.

Um nun zu bewerten, ob diese Position P des zweiten Rades R4 innerhalb des kritischen Teilbereiches liegt, wird der Abstand d zwischen dem ersten und dem zweiten Rad R2, R4 mit der vorbestimmten Überwindungsstrecke X verglichen. Gemäß Fig. 2a ist der Abstand d zwischen dem ersten und dem zweiten Rad R2, R4 kleiner als die Überwindungsstrecke X. Dies ist ein Indiz dafür, dass das zweite Rad R4 seinen Überwindungsvorgang bereits begonnen hat, wenn das erste Rad R2 die Endposition E eingenommen hat. Anhand von Fig. 2a ist nämlich erkennbar, dass sich die Position P des zweiten Rades R4 unterhalb der von Y2 ausgehenden horizontalen Linie befindet und somit in dem zweiten Parklückenbereich B2 liegt. Das zweite Rad R4 ist also bereichsweise in dem zweiten Parklückenbereich B2 positioniert, wobei das zweite Rad R4 insbesondere an dem Übergang 8 übersteht. Um das zweite Rad R4 nach dem Überwindungsvorgang des ersten Rades R2 vollständig auf dem zweiten Parklückenbereich B2 zu positionieren, wird der Überwindungsvorgang des ersten Rades R2 mit einer korrigierten Überwindungsstrecke X' durchgeführt. Die korrigierte positionieren X' wird hier als die Summe der Überwindungsstrecke X sowie des Abstands d bestimmt. Das erste Rad R2 befindet sich also nach Zurücklegen der Überwindungsstrecke X' an einer korrigierten Endposition E'. Das zweite Rad R4 wird sich dann an der Position P' vollständig auf dem zweiten Parklückenbereich B2 befinden.

Gemäß Fig. 2b ist der Abstand d zwischen dem ersten Rad R2 und dem zweiten Rad R4 an der Endposition E des ersten Rades R2 größer als die vorbestimmte Überwindungsstrecke X. Die vorhergesagte Position P des zweiten Rades R4 befindet sich hier oberhalb der von Y2 ausgehenden horizontalen Linie und liegt somit innerhalb des ersten Parklückenbereiches B1. Das zweite Rad R4 hat den Überwindungsvorgang also noch nicht begonnen. Somit ist in diesem Fall keine Korrektur der Übertragungsstrecke X notwendig. Das erste Rad R2 kann seinen Überwindungsvorgang ausgehend von der Überwindungsposition S mit der Überwindungsstrecke X durchführen.

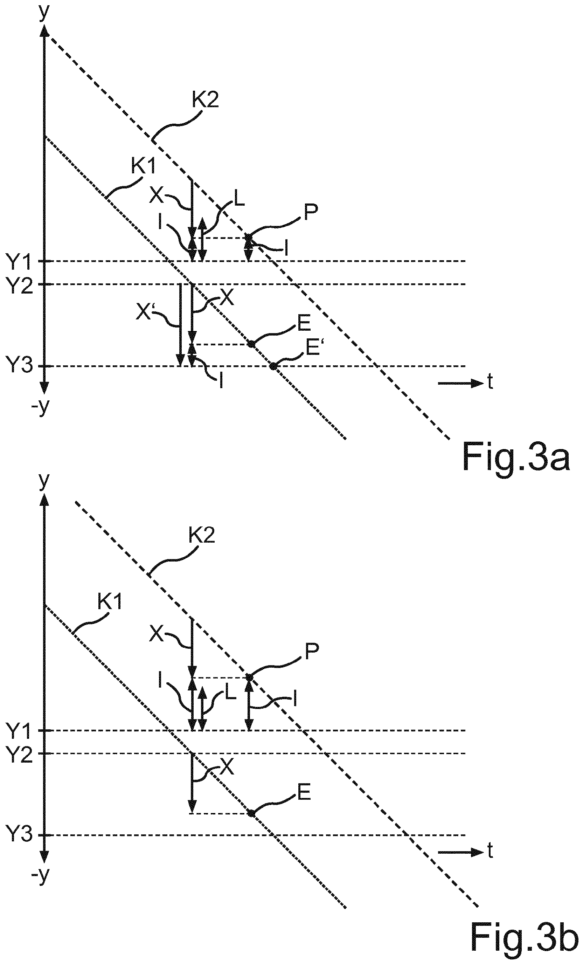

In Fig. 3a und Fig. 3b sind exemplarisch die ersten und zweiten Bewegungsbahnen K1, K2 des rechten Hinterrades R1 und des rechten Vorderrades R2 dargestellt. Das rechte Hinterrad R1 ist hier ein erstes Rad, welches einen ersten Überwindungsvorgang durchgeführt hat. Das rechte Vorderrad R2 ist hier ein zweites Rad, dessen Position P nach dem ersten Überwindungsvorgang des ersten Rades R1 vorhergesagt werden soll. Anhand der Bewegungsbahnen K1, K2 kann die Position P des zweiten Rades R2 als eine relative Position zwischen dem zweiten Rad R2 und der Vorbereitungsposition V, also als ein Abstand I zwischen dem zweiten Rad R2 und der Vorbereitungsposition V, an der Endposition E des ersten Rades R1 vorhergesagt werden. An der Vorbereitungsposition V des zweiten Rades R2 soll das Kraftfahrzeug 1 abgebremst werden, ebenso an der Endposition E des ersten Rades R1. Um nun zu verhindern, dass das Kraftfahrzeug 1 zweimal kurz hintereinander abgebremst wird, nämlich einmal an der Endposition E des ersten Rades R1 und einmal an der Vorbereitungsposition V des zweiten Rades R2, wird der Abstand I zwischen dem zweiten Rad R2 und der Vorbereitungsposition V des zweiten Rades R2 vorhergesagt und mit einem vorbestimmten Abstands-Schwellwert L verglichen. Wenn, wie in Fig. 3a gezeigt, der Abstand I keiner als der vorbestimmte Abstands-Schwellwert L ist, so würde das Kraftfahrzeug 1 zweimal kurz hintereinander angebremst. Um dies zu verhindern, wird eine korrigierte Überwindungsstrecke X' als die Summe aus der Übertragungsstrecke X und dem Abstand I bestimmt. Dadurch wird erreicht, dass sich das zweite Rad R2 an der Vorbereitungsposition V befindet, wenn sich das erste Rad R1 an der korrigierten Endposition E' befindet. Somit wird das Kraftfahrzeug 1 nur einmal abgebremst, da die Abbremsvorgänge des Kraftfahrzeugs 1 für das erste und das zweite Rad R1, R2 zusammenfallen. In Fig. 3b ist der Abstand I größer als der Abstands-Schwellwert L. Hier ist die Korrektur nicht nötig, da sich das zweite Rad R2 nicht nah genug an der Vorbereitungsposition V befindet, wenn sich das erste Rad R1 an der Endposition E befindet.

Durch das prädiktive Bestimmen der Position eines Rades an der Endposition eines anderen Rades kann ein für den Fahrer besonders komfortabler und für das Kraftfahrzeug besonders schonender Einparkvorgang in die Parklücke 3 bereitgestellt werden.

## Patentansprüche

1. Verfahren zum zumindest semi-autonomen Einparken eines Kraftfahrzeugs (1) in eine Parklücke (3) mit einem ersten Parklückenbereich (B1), einem gegenüber dem ersten Parklückenbereich (B1) erhöhten zweiten Parklückenbereich (B2) und einem von zumindest zwei Rädern (R1, R2, R3, R4) des Kraftfahrzeugs (1) nacheinander zu überwindenden Übergang (8) zwischen dem ersten und dem zweiten Parklückenbereich (B1, B2), wobei folgende Schritte durchgeführt werden:
a) Bestimmen einer Überwindungsposition (S) in dem ersten Parklückenbereich (B1) für ein erstes Rad (R1, R2) zum Starten eines ersten Überwindungsvorgang des Übergangs durch das erste Rad (R1, R2), **gekennzeichnet durch**
b) Vorgeben einer Überwindungsstrecke (X), welche durch das erste Rad (R1, R2) ausgehend von der Überwindungsposition (S) bis zu einer vorbestimmten Endposition (E) in dem zweiten Parklückenbereich (B2) während des ersten Überwindungsvorgangs zurückgelegt wird,
c) Vorhersagen einer Position (P) zumindest eines zweiten Rades (R2, R4) in der Parklücke (3) nach Durchführung des ersten Überwindungsvorganges anhand der vorgegebenen Überwindungsstrecke (X);
d) Bestimmen, ob die vorhergesagte Position (P) des zweiten Rades (R2, R4) innerhalb eines vorbestimmten Teilbereiches in der Parklücke (3) liegt, und
e) Korrigieren der Überwindungsstrecke (X) für das erste Rad (R1, R2), falls die vorhergesagte Position (P) innerhalb des vorbestimmten Teilbereiches liegt.

2. Verfahren nach Anspruch 1,
**dadurch gekennzeichnet, dass**
eine aktuelle Position des ersten und/oder des zumindest einen zweiten Rades (R1, R2, R3, R4) in der Parklücke (3) basierend auf Sensordaten einer fahrzeugseitigen Sensoreinrichtung (5, 6) und/oder Odometriedaten und/oder Radwiderstandsdaten bestimmt wird, wobei die Position (P) des zweiten Rades (R2, R4) nach Durchführung des ersten Überwindungsvorgangs basierend auf der aktuellen Position des ersten Rades (R1, R2) und/oder des zweiten Rades (R2, R4) vorhergesagt wird.

3. Verfahren nach Anspruch 1 oder 2,
**dadurch gekennzeichnet, dass**
die Überwindungsposition (S) als eine Position bestimmt wird, in welcher sich das erste Rad (R1, R2) in dem ersten Parklückenbereich (B1) befindet und den Übergang (8) berührt.

4. Verfahren nach einem der vorhergehenden Ansprüche,
**dadurch gekennzeichnet, dass**
die Überwindungsstrecke (X) für das erste Rad (R1, R2) korrigiert wird, indem eine korrigierte Überwindungsstrecke (X') als die Summe der vorbestimmten Überwindungsstrecke (X) und einem von der Position (P) des zweiten Rades (R2, R4) abhängigen Korrekturwert (l, d) bestimmt wird.

5. Verfahren nach einem der vorhergehenden Ansprüche,
**dadurch gekennzeichnet, dass**
- in Schritt c) ein erster Abstand zwischen dem zweiten Rad (R4) und dem Übergang (8) vorhergesagt wird, indem die Position (P) des zweiten Rades (R4) relativ zu dem Übergang (8) vorhergesagt wird,
- in Schritt d) zum Bestimmen, ob die vorhergesagte Position (P) des zweiten Rades (R4) innerhalb des vorbestimmten Teilbereiches der Parklücke (3) liegt, der vorhergesagte erste Abstand mit einem vorbestimmten ersten Abstands-Schwellwert verglichen wird, und
- in Schritt e) die Überwindungsstrecke (X) für das erste Rad (R2) korrigiert wird, falls der vorhergesagte erste Abstand einen vorbestimmten ersten Abstands-Schwellwert unterschreitet.

6. Verfahren nach Anspruch 5,
**dadurch gekennzeichnet, dass**
die Überwindungsstrecke (X) für das erste Rad (R2) korrigiert wird, indem eine korrigierte Überwindungsstrecke (X') als die Summe der vorbestimmten Überwindungsstrecke (X) und einer Differenz zwischen dem ersten Abstand und dem ersten Abstands-Schwellwert bestimmt wird.

7. Verfahren nach einem der vorhergehenden Ansprüche,
**dadurch gekennzeichnet, dass**
- in Schritt c) ein zweiter Abstand (d) zwischen dem ersten und dem zweiten Rad (R2, R4) vorhergesagt wird, indem die Position (P) des zweiten Rades (R4) relativ zu dem ersten Rad (R2) vorhergesagt wird,
- in Schritt d) zum Bestimmen, ob die vorhergesagte Position (P) des zweiten Rades (R4) innerhalb des vorbestimmten Teilbereiches der Parklücke (3) liegt, der vorhergesagte zweite Abstand (d) mit der vorbestimmten Überwindungsstrecke (X) verglichen wird, und
- in Schritt e) die Überwindungsstrecke (X) für das erste Rad (R2) korrigiert wird, falls der vorhergesagte zweite Abstand (I) die vorbestimmte Überwindungsstrecke (X) unterschreitet.

8. Verfahren nach Anspruch 7,
**dadurch gekennzeichnet, dass**
die Überwindungsstrecke (X) für das erste Rad (R2) korrigiert wird, indem eine korrigierte Überwindungsstrecke (X') als die Summe der vorbestimmten Überwindungsstrecke (X) und des zweiten Abstands (d) bestimmt wird.

9. Verfahren nach einem der vorhergehenden Ansprüche,
**dadurch gekennzeichnet, dass**
- in Schritt c) ein dritter Abstand (I) zwischen dem zweiten Rad (R2) und einer vorbestimmten, sich in dem ersten Parklückenbereich (B1) befindlichen Vorbereitungsposition (V) für eine Vorbereitung eines zweiten Überwindungsvorgang des Übergangs durch das zweite Rad (R2) bestimmt wird, indem die Position (P) des zweiten Rades (R2) relativ zu der Vorbereitungsposition (V) vorhergesagt wird,
- in Schritt d) zum Bestimmen, ob die vorhergesagte Position (P) des zweiten Rades (R2) innerhalb des vorbestimmten Teilbereiches der Parklücke (3) liegt, der vorhergesagte dritte Abstand (I) mit einem vorbestimmten zweiten Abstands-Schwellwert (L) verglichen wird, und
- in Schritt e) die Überwindungsstrecke (X) für das erste Rad (R1) korrigiert wird, falls der vorhergesagte dritte Abstand (I) den vorbestimmten zweiten Abstands-Schwellwert (L) unterschreitet.

10. Verfahren nach Anspruch 9,
**dadurch gekennzeichnet, dass**
die Überwindungsstrecke (X) für das erste Rad (R1) korrigiert wird, indem eine korrigierte Überwindungsstrecke (X') als die Summe der vorbestimmten Überwindungsstrecke (X) und des dritten Abstands (I) bestimmt wird.

11. Verfahren nach einem der vorhergehenden Ansprüche,
**dadurch gekennzeichnet, dass**
zum autonomen Einparken des Kraftfahrzeugs (1) das erste Rad (R1, R2) automatisch an der Überwindungsposition (S) positioniert wird, das erste Rad (R1, R2) zum Durchführen des ersten Überwindungsvorgangs entlang der Überwindungsstrecke (X) oder entlang einer korrigierten Überwindungsstrecke (X') bewegt wird und das Kraftfahrzeug (1) abgebremst wird, sobald sich das erste Rad (R1, R2) an der Endposition (E) der Überwindungsstrecke (X) oder einer korrigierten Endposition (E') der korrigierten Überwindungsstrecke (X') befindet.

12. Fahrerassistenzsystem (2) für ein Kraftfahrzeug (1) zum zumindest semi-autonomen Einparken des Kraftfahrzeugs (1) in eine Parklücke (3) mit einem ersten Parklückenbereich (B1), einem gegenüber dem ersten Parklückenbereich (B1) erhöhten zweiten Parklückenbereich (B2) und einem von zumindest zwei Rädern (R1, R2, R3, R4) des Kraftfahrzeugs (1) nacheinander zu überwindenden Übergang (8) zwischen dem ersten und dem zweiten Parklückenbereich (B1, B2), wobei das Fahrerassistenzsystem (2) zum Durchführen eines Verfahrens nach einem der vorhergehenden Ansprüche ausgelegt ist.

13. Kraftfahrzeug (1) mit einem Fahrerassistenzsystem (2) nach Anspruch 12.

## Claims

1. Method for at least semi-autonomously parking a motor vehicle (1) in a parking space (3) with a first parking space area (B1), a second parking space area (B2) which is raised in comparison with the first parking space area (B1), and a transition (8), to be successively overcome by at least two wheels (R1, R2, R3, R4) of the motor vehicle (1), between the first and the second parking space areas (B1, B2), wherein the following steps are carried out:
a) determining an overcoming position (S) in the first parking space area (B1) for a first wheel (R1, R2) for starting a first overcoming process of the transition by the first wheel (R1, R2), **characterized by**
b) specifying an overcoming distance (X) which is travelled by the first wheel (R1, R2) starting from the overcoming position (S) up to a predetermined end position (E) in the second parking space area (B2) during the first overcoming process,
c) predicting a position (P) of at least one second wheel (R2, R4) in the parking space (3) after the first overcoming process is carried out, on the basis of the specified overcoming distance (X);
d) determining whether the predicted position (P) of the second wheel (R2, R4) lies within a predetermined partial area in the parking space (3), and
e) correcting the overcoming distance (X) for the first wheel (R1, R2) if the predicted position (P) lies within the predetermined partial area.

2. Method according to Claim 1,
**characterized in that**
a current position of the first and/or of the at least one second wheel (R1, R2, R3, R4) in the parking space (3) is determined on the basis of sensor data of a vehicle-side sensor device (5, 6) and/or odometry data and/or wheel resistance data, wherein the position (P) of the second wheel (R2, R4) after the first overcoming process has been carried out is predicted on the basis of the current position of the first wheel (R1, R2) and/or of the second wheel (R2, R4).

3. Method according to Claim 1 or 2,
**characterized in that**
the overcoming position (S) is determined as a position in which the first wheel (R1, R2) is located in the first parking space area (B1) and makes contact with the transition (8).

4. Method according to one of the preceding claims,
**characterized in that**
the overcoming distance (X) for the first wheel (R1, R2) is corrected **in that** a corrected overcoming distance (X') is determined as the sum of the predetermined overcoming distance (X) and a correction value (1, d) which is dependent on the position (P) of the second wheel (R2, R4) .

5. Method according to one of the preceding claims,
**characterized in that**
- in step c), a first distance between the second wheel (R4) and the transition (8) is predicted by predicting the position (P) of the second wheel (R4) relative to the transition (8),
- in step d), in order to determine whether the predicted position (P) of the second wheel (R4) lies within the predetermined partial area of the parking space (3), the predicted first distance is compared with a predetermined first distance threshold value, and
- in step e), the overcoming distance (X) for the first wheel (R2) is corrected if the predicted first distance undershoots a predetermined first distance threshold value.

6. Method according to Claim 5,
**characterized in that**
the overcoming distance (X) for the first wheel (R2) is corrected by determining a corrected overcoming distance (X') as the sum of the predetermined overcoming distance (X) and the difference between the first distance and the first distance threshold value.

7. Method according to one of the preceding claims,
**characterized in that**
- in step c), a second distance (d) between the first and the second wheels (R2, R4) is predicted by predicting the position (P) of the second wheel (R4) relative to the first wheel (R2),
- in step d), in order to determine whether the predicted position (P) of the second wheel (R4) lies within the predetermined partial area of the parking space (3), the predicted second distance (d) is compared with the predetermined overcoming distance (X), and
- in step e), the overcoming distance (X) for the first wheel (R2) is corrected if the predicted second distance (1) undershoots the predetermined overcoming distance (X).

8. Method according to Claim 7,
**characterized in that**
the overcoming distance (X) for the first wheel (R2) is corrected by determining a corrected overcoming distance (X') as the sum of the predetermined overcoming distance (X) and the second distance (d).

9. Method according to one of the preceding claims,
**characterized in that**
- in step c), a third distance (1) between the second wheel (R2) and a predetermined preparation position (V), which is located in the first parking space area (B1), for preparing a second overcoming process of the transition by the second wheel (R2) is determined by predicting the position (P) of the second wheel (R2) relative to the preparation position (V),
- in step d), in order to determine whether the predicted position (P) of the second wheel (R2) lies within the predetermined partial area of the parking space (3), the predicted third distance (1) is compared with a predetermined second distance threshold value (L), and
- in step e), the overcoming distance (X) for the first wheel (R1) is corrected if the predicted third distance (1) undershoots the predetermined second distance threshold value (L).

10. Method according to Claim 9,
**characterized in that**
the overcoming distance (X) for the first wheel (R1) is corrected by determining a corrected overcoming distance (X') as the sum of the predetermined overcoming distance (X) and the third distance (1).

11. Method according to one of the preceding claims,
**characterized in that**,
in order to park the motor vehicle (1) autonomously, the first wheel (R1, R2) is positioned automatically at the overcoming position (S), the first wheel (R1, R2) is moved along the overcoming distance (X) or along a corrected overcoming distance (X') in order to carry out the first overcoming process, and the motor vehicle (1) is braked as soon as the first wheel (R1, R2) is located at the end position (E) of the overcoming distance (X) or at a corrected end position (E') of the corrected overcoming distance (X').

12. Driver assistance system (2) for a motor vehicle (1) for at least semi-autonomously parking the motor vehicle (1) in a parking space (3) with a first parking space area (B1), a second parking space area (B2) which is raised in comparison with the first parking space area (B1), and a transition (8), to be successively overcome by at least two wheels (R1, R2, R3, R4) of the motor vehicle (1), between the first and the second parking space areas (B1, B2), wherein the driver assistance system (2) is configured to carry out a method according to one of the preceding claims.

13. Motor vehicle (1) having a driver assistance system (2) according to Claim 12.

## Revendications

1. Procédé pour stationner de manière au moins semi-autonome un véhicule automobile (1) sur un emplacement de stationnement (3) qui présente une première partie (B1) d'emplacement de stationnement, une deuxième partie (B2) d'emplacement de stationnement située en amont de la première partie (B1) d'emplacement de stationnement et entre la première et la deuxième partie (B1, B2) d'emplacement de stationnement une transition (8) qui doit être traversée successivement par au moins deux roues (R1, R2, R3, R4) du véhicule (1), le procédé comprenant les étapes suivantes :
a) déterminer dans la première partie (B1) d'emplacement de stationnement une position de traversée (S) par une première roue (R1, R2) pour lancer une première opération de traversée de la transition par la première roue (R1, R2),
**caractérisé par**
b) définir une trajectoire de traversée (X) qui pendant la première opération de traversée doit être parcourue par la première roue (R1, R2) entre la position de traversée (S) et une position finale prédéterminée (E) située dans la deuxième partie (B2) d'emplacement de stationnement,
c) après exécution de la première opération de traversée, prédire à l'aide de la trajectoire de traversée (X) prédéterminée une position (P) d'au moins une deuxième roue (R2, R4) dans l'emplacement de stationnement (3),
d) vérifier si la position (P) prédite pour la deuxième roue (R2, R4) est située dans une partie prédéterminée de l'emplacement de stationnement (3) et
e) corriger la trajectoire de traversée (X) de la première roue (R1, R2) au cas où la position (P) prédite est située à l'intérieur de la partie prédéterminée.

2. Procédé selon la revendication 1, **caractérisé en ce que** la position à un instant donné de la première et/ou de la ou des deuxièmes roues (R1, R2, R3, R4) dans l'emplacement de stationnement (3) est déterminée sur la base de données de capteurs d'un dispositif (5, 6) de capteurs propre au véhicule, de données d'odométrie et/ou de données de résistance exercée par les roues, la position (P) de la deuxième roue (R2, R4) après l'exécution de la première opération de traversée étant prédite sur la base de la position à cet instant de la première roue (R1, R2) et/ou de la deuxième roue (R2, R4).

3. Procédé selon les revendications 1 ou 2, **caractérisé en ce que** la position de traversée (S) est définie comme position dans laquelle la première roue (R1, R2) se trouve à l'intérieur de la première partie (B1) d'emplacement de stationnement et qui touche la transition (8).

4. Procédé selon l'une des revendications précédentes, **caractérisé en ce que** la trajectoire de traversée (X) de la première roue (R1, R2) est corrigée en déterminant une trajectoire de traversée (X') corrigée qui est la somme de la trajectoire de traversée (X) prédéterminée et d'une valeur de correction (1, d) qui dépend de la position (P) de la deuxième roue (R2, R4).

5. Procédé selon l'une des revendications précédentes, **caractérisé en ce que** :
- à l'étape c), une première distance entre la deuxième roue (R2, R4) et la transition (8) est prédite en prédisant la position (P) de la deuxième roue (R2, R4) par rapport à la transition (8),
- à l'étape d), pour déterminer si la position (P) prédite de la deuxième roue (R4) est située à l'intérieur de la partie prédéterminée de l'emplacement de stationnement (3), la première distance prédite est comparée à une première valeur prédéterminée de seuil de distance et
- à l'étape e), la trajectoire de traversée (X) de la première roue (R2) est corrigée au cas où la première distance prédite n'atteint pas une première valeur prédéterminée de seuil de distance.

6. Procédé selon la revendication 5, **caractérisé en ce que** la trajectoire de traversée (X) de la première roue (R2) est corrigée en définissant une trajectoire de traversée (X') corrigée en tant que somme de la trajectoire de traversée (X) prédéterminée et une différence entre la première distance et la première valeur de seuil de distance.

7. Procédé selon l'une des revendications précédentes, **caractérisé en ce que** :
- à l'étape c), une deuxième distance (d) entre la première et la deuxième roue (R2, R4) est prédite en prédisant la position (P) de la deuxième roue (R4) par rapport à la première roue (R2),
- à l'étape d), pour déterminer si la position (P) prédite de la deuxième roue (R4) est située à l'intérieur de la partie prédéterminée de l'emplacement de stationnement (3), la deuxième distance (d) prédite est comparée à la trajectoire de traversée (X) prédéterminée et
- à l'étape e), la trajectoire de traversée (X) de la première roue (R2) est corrigée au cas où la deuxième distance (1) prédite n'atteint pas la trajectoire de traversée (X) prédéterminée.

8. Procédé selon la revendication 7, **caractérisé en ce que** la trajectoire de traversée (X) de la première roue (R2) est corrigée en définissant une trajectoire de traversée (X') corrigée en tant que somme de la trajectoire de traversée (X) prédéterminée et de la deuxième distance (d).

9. Procédé selon l'une des revendications précédentes, **caractérisé en ce que** :
- à l'étape c), une troisième distance (1) entre la deuxième roue (R2) et une position prédéterminée de préparation (V) située dans la première partie (B1) d'emplacement de stationnement et servant à préparer une deuxième opération de traversée de la transition par la deuxième roue (R2) est déterminée en prédisant la position (P) de la deuxième roue (R2) par rapport à la position de préparation (V),
- à l'étape d), pour déterminer si la position (P) prédite de la deuxième roue (R2) est située à l'intérieur de la partie prédéterminée de l'emplacement de stationnement (3), la troisième distance (1) prédite est comparée à une deuxième valeur prédéterminée (L) de seuil de distance et
- à l'étape e), la trajectoire de traversée (X) de la première roue (R1) est corrigée au cas où la troisième distance (1) prédite n'atteint pas la deuxième valeur prédéterminée (L) de seuil de distance.

10. Procédé selon la revendication 9, **caractérisé en ce que** la trajectoire de traversée (X) de la première roue (R1) est corrigée en définissant une trajectoire de traversée (X') corrigée en tant que somme de la trajectoire de traversée (X) prédéterminée et de la troisième distance (1).

11. Procédé selon l'une des revendications précédentes, **caractérisé en ce que** pour le stationnement autonome du véhicule (1), la première roue (R1, R2) est positionnée automatiquement sur la position de traversée (S), la première roue (R1, R2) est déplacée suivant la trajectoire de traversée (X) ou suivant une trajectoire de traversée (X') corrigée en vue d'exécuter la première opération de traversée et le véhicule (1) est freiné dès que la première roue (R1, R2) est arrivée en la position finale (E) de la trajectoire de traversée (X) ou en une position finale (E') corrigée de la trajectoire de traversée (X') corrigée.

12. Système (2) d'assistance au conducteur d'un véhicule (1) pour stationner de manière au moins semi-autonome un véhicule automobile (1) sur un emplacement de stationnement (3) qui présente une première partie (B1) d'emplacement de stationnement, une deuxième partie (B2) d'emplacement de stationnement située en amont de la première partie (B1) d'emplacement de stationnement et entre la première et la deuxième partie (B1, B2) d'emplacement de stationnement une transition (8) qui doit être traversée successivement par au moins deux roues (R1, R2, R3, R4) du véhicule (1), le système (2) d'assistance au conducteur étant configuré pour mettre en oeuvre un procédé selon l'une des revendications précédentes.

13. Véhicule (1) équipé d'un système (2) d'assistance au conducteur selon la revendication 12.
